# EUROPÄISCHE PATENTSCHRIFT

(11) **EP 2 503 107 B1**
(45) Veröffentlichungstag und Bekanntmachung des Hinweises auf die Patenterteilung: **07.05.2014**
(21) Anmeldenummer: 11159244.0
(22) Anmeldetag: 22.03.2011
(51) Int. Cl.: F01D 25/18, F01D 25/12, F16C 37/00

(54) **Lageranordnung, Strömungsmaschine sowie Verfahren**
Bearings, fluid flow engine and method
Agencement de palier, turbomachine et procédé

(43) Veröffentlichungstag der Anmeldung: 26.09.2012
(73) Patentinhaber: MTU Aero Engines AG, 80995 München (DE); FAG Aerospace GmbH & Co. KG, 97421 Schweinfurt (DE)
(72) Erfinder: Neuhäusler, Stefan, 86672 Thierhaupten (DE); Bayer, Erwin, 85221 Dachau (DE); Eisen, Markus, 30161 Hannover (DE); Broichhausen, Klaus, 82194 Gröbenzell (DE); Streit, Edgar, 97711 Massbach (DE)
(74) Vertreter: Isarpatent

(56) Entgegenhaltungen:
- DE-A1-102009 056 662
- GB-A- 2 226 608
- GB-A- 2 366 842
- JP-A- 2005 106 144
- US-A- 3 977 739
- US-A- 5 911 678
- US-A1- 2005 286 824

## Beschreibung

Die vorliegende Erfindung betrifft eine Lageranordnung, eine Strömungsmaschine sowie ein Verfahren.

In Hochleistungskugellagern wird das Schmieröl dazu verwendet, einerseits die Reibung zwischen den Reibungspartnern zu vermindern und andererseits die Komponenten eines jeweiligen Lagers zu kühlen. Tatsächlich wird ein Großteil des zugeführten Schmieröls für die Kühlung benötigt.

Nachteilig bei den vorstehend beschriebenen Lagern hat sich der Umstand herausgestellt, dass das zur Kühlung benötigte Schmieröl den Rollwiderstand eines jeweiligen Lagers aufgrund der höheren Walkarbeit erhöht.

GB2226608 offenbart eine Lageranordnung, welche keine Ölschmurung aufweist.

Aufgabe der vorliegenden Erfindung ist es, den vorstehend beschriebenen Nachteil zumindest zu reduzieren.

Diese Aufgabe wird gelöst durch eine Lageranordnung mit den Merkmalen des Patentanspruchs 1, durch eine Strömungsmaschine mit den Merkmalen des Patentanspruchs 9 sowie durch ein Verfahren mit den Merkmalen des Patentanspruchs 10.

Demgemäß wird eine Lageranordnung, insbesondere für eine Strömungsmaschine, aufweisend ein erstes und/oder zweites Lagergehäuseteil mit wenigstens einem Kühlmittelkanal für ein Kühlen des ersten und/oder zweiten Lagergehäuseteils und wenigstens einem Schmiermittelkanal zum Zuführen von Schmiermittel an ein Lager, wobei der Kühlmittelkanal und der Schmiermittelkanal voneinander fluidisch getrennt vorgesehen sind, bereitgestellt.

Darüber hinaus ist das erste und/oder zweite Lagergehäuseteil mitsamt dem Hühlkanal und ggf. dem Schmiermittelkanal generativ gefertigt.

Ferner wird eine Strömungsmaschine mit der erfindungsgemäßen Lageranordnung bereitgestellt.

Weiterhin wird ein Verfahren zum Herstellen einer Lageranordnung, wobei ein erstes und/oder zweites Lagergehäuseteil mit wenigstens einem Kühlmittelkanal für ein Kühlen des ersten und/oder zweiten Lagergehäuseteils und wenigstens einem Schmiermittelkanal zum Zuführen von Schmiermittel an ein Lager gebildet wird, wobei der Kühlmittelkanal und der Schmiermittelkanal voneinander fluidisch getrennt vorgesehen werden, bereitgestellt.

Darüber hinaus ist das erste und/oder zweite Lagergehäuseteil mitsamt dem Hühlkanal und ggf. dem Schmiermittelkanal generativ gefertigt.

Mit "generativ gefertigt" ist gemeint, dass das Lagergehäuseteil aus einem formlosen (Flüssigkeiten, Pulver und Ähnliches) oder formneutralen (band- oder drahtförmigen) Material in einem Urformverfahren hergestellt wird. Zu diesen Verfahren gehören insbesondere Stereolithographie, selektives Laserschmelzen, selektives Lasersintem, Fleece Deposition Modelling, Laminated Object Modelling, 3D Printing und Kaltgasspritzen. Diesen Verfahren ist gemein, dass kein spezielles Werkzeug erforderlich ist, welches die Geometrie des herzustellenden Werkstücks vordefiniert, wie beispielsweise Gussformen.

Vorteilhafte Ausgestaltungen der Erfindung ergeben sich aus den Unteransprüchen.

Gemäß einer Ausgestaltung der erfindungsgemäßen Lageranordnung ist der Kühlmittelkanal und ggf. der Schmiermittelkanal in das erste und/oder zweite Lagergehäuseteil integriert. Mit "integriert" ist gemeint, dass der Kühlmittelkanal und ggf. der Schmiermittelkanal in dem Material des ersten und/oder zweiten Lagergehäuseteils verläuft. Mit anderen Worten ist das erste und/oder zweite Lagergehäuseteil aus einem Stück gebildet, in welchem sich der Kühlmittelkanal und ggf. der Schmiermittelkanal erstreckt.

Gemäß einer weiteren Ausgestaltung der erfindungsgemäßen Lageranordnung verläuft der Kühlkanal in unmittelbarer Nähe zu dem Lager in dem ersten und/oder zweiten Lagergehäuseteil. Dadurch kann die Wärme nahezu unmittelbar dort abgeführt werden, wo sie auch entsteht.

Das Lager kann als Gleitlager oder Rollenlager ausgebildet sein.

Gemäß einer weiteren Ausgestaltung der erfindungsgemäßen Lageranordnung weist das Lager eine erste Lagerschale auf, welche an dem ersten Lagergehäuseteil gehalten ist, wobei das Lager eine zweite Lagerschale aufweist, welche mit einer zu lagernden Welle verbindbar und an dem zweiten Lagergehäuseteil gehalten ist, wobei ein zwischen der ersten und zweiten Lagerschale gebildeter Zwischenraum mit dem Schmiermittelkanal in fluidischer Verbindung steht. Während der Schmiermittelkanal demnach eine Öffnung zu dem Zwischenraum hin aufweist, um das Lager mit Schmiermittel zu versorgen, ist der Kühlmittelkanal von dem Lager getrennt vorgesehen.

Gemäß einer weiteren Ausgestaltung der erfindungsgemäßen Lageranordnung ist das Lager als ein Wälzlager, insbesondere Kugelrollenlager, ausgebildet, wobei Wälzkörper in dem Zwischenraum angeordnet sind. Somit werden die Wälzkörper von dem Schmiermittelkanal mit Schmiermittel versorgt.

Gemäß einer weiteren Ausgestaltung der erfindungsgemäßen Lageranordnung ist das erste Lagergehäuseteil stationär gegenüber der Welle vorgesehen. Weiterhin dreht sich bevorzugt das zweite Lagergehäuseteil mit der Welle mit.

Gemäß einer weiteren Ausgestaltung der erfindungsgemäßen Lageranordnung ist im Bereich eines Spalts zwischen dem ersten und zweiten Lagergehäuseteil wenigstens ein Magnet angeordnet, wobei das Schmiermittel magnetisierbar ausgebildet ist und der Magnet ein Austreten des Schmiermittels aus dem Spalt verhindert. Somit wird, obwohl sich das erste und zweite Lagergehäuseteil gegeneinander bewegen, ein zwischen diesen gebildeter Spalt sicher abgedichtet und ein Austreten von Schmiermittel aus dem Zwischenraum der Lageranordnung sicher verhindert.

Alternativ oder zusätzlich kann vorgesehen sein, dass im Bereich eines Spalts zwischen dem ersten und dem zweiten Lagergehäuseteil wenigstens eine Dichtung angeordnet ist, welche ein Austreten des Schmiermittels und/oder Kühlmittels aus dem Spalt verhindert, wobei die Dichtung bevorzugt einen Verbindungskanal für das Kühlmittel abdichtet, welcher den Spalt überbrückt.

Selbstverständlich können mehrere Kühlmittelkanäle und/oder mehrere Schmiermittelkanäle vorgesehen sein.

Die Erfindung wird nachfolgend anhand von Ausführungsbeispielen unter Bezugnahme auf die beiliegenden Figuren der Zeichnung näher erläutert.

Es zeigen:
Fig. 1 einen Schnitt durch eine Lageranordnung gemäß einem Ausführungsbeispiel der vorliegenden Erfindung; und
Fig. 2 einen Schnitt durch eine Lageranordnung gemäß einem weiteren Ausführungsbeispiel der vorliegenden Erfindung.

In den Figuren bezeichnen gleiche Bezugszeichen gleiche oder funktionsgleiche Komponenten, soweit nichts Gegenteiliges angegeben ist.

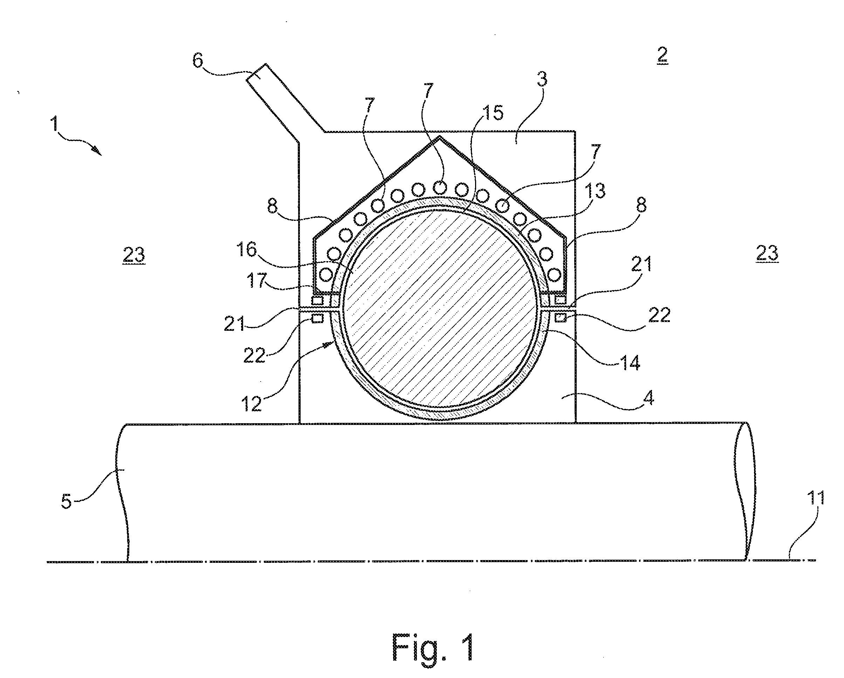

Die in Fig. 1 gezeigte Lageranordnung 1 kann beispielsweise Bestandteil einer nicht weiter dargestellten Strömungsmaschine 2 sein.

Die Lageranordnung 1 umfasst ein erstes Lagergehäuseteil 3, ein zweites Lagergehäuseteil 4 sowie eine Welle 5, welche der besseren Übersichtlichkeit halber jeweils nicht schraffiert dargestellt sind.

Das Lagergehäuseteil 3 ist beispielsweise mit einer Struktur 6 der Strömungsmaschine 2 fest verbunden und damit stationär vorgesehen. Dagegen ist das Lagergehäuseteil 4 fest auf der Welle 5 vorgesehen und rotiert damit mit dieser mit.

Das Lagergehäuseteil 3 weist eine Vielzahl von Kühlmittelkanälen 7 sowie eine Vielzahl von Schmiermittelkanälen 8 in dieses integriert auf.

Die Kühlmittelkanäle 7 sind Bestandteil eines nicht weiter dargestellten geschlossenen Kühlmittelkreislaufs. Das Kühlmittel kann beispielsweise Öl sein.

Die Schmiermittelkanäle 8 sind Bestandteil eines nicht weiter dargestellten, geschlossenen Schmiermittelkreislaufs. Bei dem Schmiermittel handelt es sich beispielsweise um Öl.

Das Lagergehäuseteil 3 ist als generativ gefertigtes Bauteil hergestellt. Bevorzugt wird das Lagergehäuseteil 3 samt der Kühlmittelkanäle 7 sowie der Schmiermittelkanäle 8 in einem Selective Laser Melting-Verfahren oder einem Laser-Sinter-Verfahren hergestellt. Dadurch lässt sich das Lagergehäuseteil 3 aus einem Stück herstellen, wobei in dem Herstellungsprozess gleichzeitig auch die Kühlmittelkanäle 7 und die Schmiermittelkanäle 8 hergestellt werden.

Die Kühlmittelkanäle 7 können beispielsweise auf einer Kreislinie umlaufend um eine Mittelachse 11 der Lageranordnung 1 ausgebildet sein. Die Mittelachse 11 fällt dabei mit einer Mittelachse der Welle 5 zusammen.

Die Lageranordnung 1 weist weiterhin ein Lager 12 auf, welches zwischen den Lagergehäuseteilen 3 und 4 angeordnet ist. Das Lager 12 kann sich aus einer ersten Lagerschale 13 und einer zweiten Lagerschale 14 zusammensetzen. Die erste Lagerschale 13 ist an dem Lagergehäuseteil 3 und die zweite Lagerschale 14 an dem Lagergehäuseteil 4 gehalten, d.h. mit diesem jeweils fest verbunden. In dem zwischen der ersten und zweiten Lagerschale 13, 14 gebildeten Zwischenraum 15 sind eine Vielzahl von Wälzkörpern 16, insbesondere Kugeln, auf einer Kreislinie um die Mittelachse 11 angeordnet.

Der Zwischenraum 15 wird mittels der Schmiermittelkanäle 8 mit Schmiermittel versorgt, so dass ein reibungsarmes Wälzen der Wälzkörper 16 gewährleistet ist. Die zugeführte Schmiermittelmenge ist dabei so bemessen, dass bevorzugt lediglich eine Minimalschmierung gewährleistet wird, ohne jedoch die Walkarbeit, welche die Wälzkörper 16 verrichten, unnötig zu erhöhen. Der Schmiermittelfilm in dem Zwischenraum 15 ist gerade so bemessen, dass dieser nicht abreißt.

Wie in der Figur zu erkennen, sind die Kühlmittelkanäle 7 in unmittelbarer Nähe zu der ersten Lagerschale 13 angeordnet. Dagegen verlaufen die Schmiermittelkanäle 8 im Wesentlichen - abgesehen von einem kurzen Zuleitungsabschnitt 17 - von dem Wälzkörper 16 aus gesehen hinter den Kühlmittelkanälen 7. Dadurch ergibt sich der Vorteil, dass die entstehende Reibungswärme von den Schmiermittelkanälen 8 weitestgehend ferngehalten werden kann, da die Wärme in den Kühlmittelkanälen 7 absorbiert wird. Somit wird eine Überhitzung, insbesondere ein Verkoken, des Schmiermittels vermieden.

Im Bereich eines Spalts 21 zwischen dem ersten und zweiten Lagergehäuseteil 3, 4, können in die jeweiligen Lagergehäuseteile 3, 4 integriert Permanentmagnete 22 vorgesehen sein. Wird das Schmiermittel magnetisierbar vorgesehen, so wird ein Durchtritt des Schmiermittels durch den mit dem Zwischenraum 15 in Verbindung stehenden Spalt 21 und ein Austritt in die Umgebung 23 mittels der Magnete 22 verhindert.

Der Kühlmittelkreislauf lässt sich unabhängig von dem Schmiermittelkreislauf steuern, so dass stets eine optimale Kühlung wie auch eine optimale Schmierung gewährleistet wird, ohne dass unnötige Walkarbeit geleistet wird. Selbstverständlich können die Kühlkanäle mit einem anderen als dem in der Figur gezeigten kreisförmigen Querschnitt ausgebildet sein. Beispielsweise können die Kühlkanäle auch mit Kühlrippen ausgebildet sein. Dadurch wird ein Wärmetauscheffekt zwischen dem Kühlmittel und dem ersten Lagergehäuseteils 3 weiter verbessert. Weiterhin sind die Kühlmittelkanäle 7 bevorzugt derart ausgestaltet und angeordnet, dass die erste Lagerschale 13 eine gleichmäßige Temperatur aufweist. Weiterhin kann der Kühlmittelkreislauf derart ausgebildet sein, dass das Kühlmittel nicht mit der Luft in der Umgebung 23 in Kontakt kommt, so dass ein Aufschäumen des Kühlmittels vermieden wird.

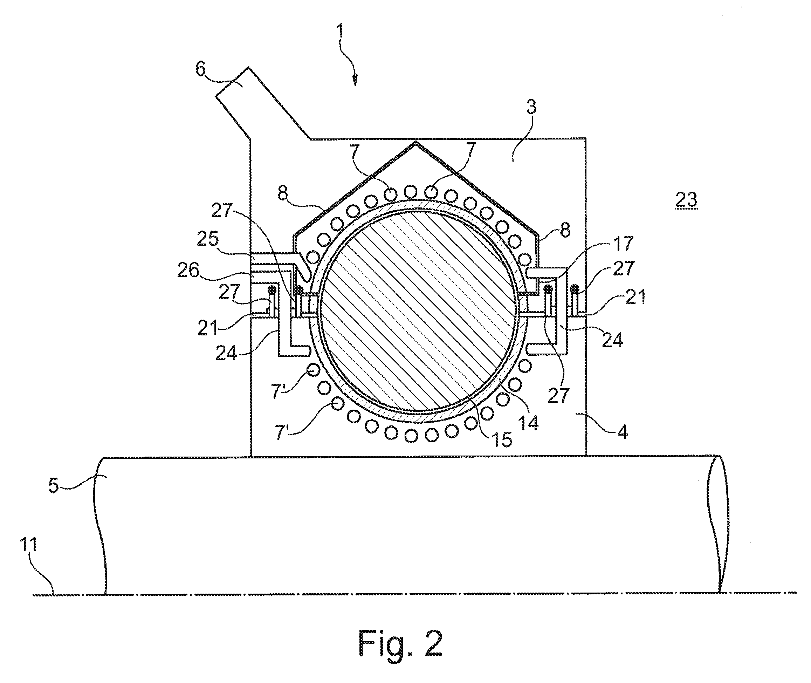

Im Unterschied zu dem Ausführungsbeispiel nach Fig. 1 sind bei dem Ausführungsbeispiel nach Fig. 2 nicht nur Kühlmittelkanäle 7 in das erste Lagergehäuseteil 3, sondern auch Kühlmittelkanäle 7' in das zweite Lagergehäuseteil 4 integriert vorgesehen. Die Kühlmittelkanäle 7' sind ebenfalls Bestandteil des nicht weiter dargestellten Kühlmittelkreislaufs. Dazu sind die Kühlmittelkanäle 7' mittels eines Verbindungskanals, insbesondere einer Überströmnut 24, mit den Kühlmittelkanälen 7 fluidisch verbunden. Die Überströmnut 24 überbrückt den Spalt 21 zwischen dem ersten und zweiten Lagergehäuseteil 3, 4.

Die Lageranordnung 1 ist beispielsweise derart vorgesehen, dass das Kühlmittel über einen Versorgungskanal 25 in dem ersten Lagergehäuseteil 3 in die Kühlmittelkanäle 7 fließt, hiernach mittels der Überströmnut 24 in die Kühlmittelkanäle 7', dann über eine weitere Überströmnut 24 von dem zweiten Lagergehäuseteil 4 zurück in das erste Lagergehäuseteil 3 und anschließend in einen Entsorgungskanal 26.

Insbesondere die Ausführungen zu den Kühlmittelkanälen 7 in Zusammenhang mit dem Ausführungsbeispiel nach Fig. 1 gelten für die Kühlmittelkanäle 7' entsprechend.

Ferner weist die Lageranordnung 1 gemäß Fig. 2 im Unterschied zu Fig. 1 Bürstendichtungen 27 auf, welche den Spalt 21 zur Umgebung 23 hin abdichten, um einen Austritt von

Kühlmittel und Schmiermittel in diese zu verhindern. Dazu ist bevorzugt eine Bürstendichtung 27 vor und eine Bürstendichtung 27 hinter einer jeweiligen Überströmnut 24 angeordnet.

Anstelle der Bürstendichtung 27 können auch andere Dichtungen verwendet werden.

Obwohl die vorliegende Erfindung anhand bevorzugter Ausführungsbeispiele beschrieben wurde, ist sie darauf keineswegs beschränkt, sondern auf vielfältige Weise modifizierbar. Insbesondere sind die für die erfindungsgemäße Lageranordnung beschriebenen Ausgestaltungen und Ausführungsbeispiele auf die erfindungsgemäße Strömungsmaschine sowie auf das erfindungsgemäße Verfahren entsprechend anwendbar, und umgekehrt. Weiterhin sei darauf hingewiesen, dass "ein" vorliegend keine Vielzahl ausschließt.

## Patentansprüche

1. Lageranordnung (1), insbesondere für eine Strömungsmaschine (2), aufweisend ein erstes und/oder zweites Lagergehäuseteil (3, 4) mit wenigstens einem Kühlmittelkanal (7, 7') für ein Kühlen des ersten und/oder zweiten Lagergehäuseteils (3, 4) und wenigstens einem Schmiermittelkanal (8) zum Zuführen von Schmiermittel an ein Lager (12), wobei der Kühlmittelkanal (7, 7') und der Schmiermittelkanal (8) voneinander fluidisch getrennt vorgesehen sind, und wobei das erste und/oder zweite Lagergehäuseteil (3, 4) mitsamt dem Kühlmittelkanal (7, 7') generativ gefertigt ist aus einem formlosen oder formneutralen Material in einem Urformverfahren.

2. Lageranordnung nach Anspruch 1,
**dadurch gekennzeichnet,**
**dass** der Kühlmittelkanal (7, 7') und ggf. der Schmiermittelkanal (8) in das erste und/oder zweite Lagergehäuseteil (3, 4) integriert ist.

3. Lageranordnung nach Anspruch 1 oder 2,
**dadurch gekennzeichnet,**
**dass** das erste und/oder zweite Lagergehäuseteil (3, 4) mitsamt dem Kühlkanal (7, 7') und dem Schmiermittelkanal (8) generativ gefertigt ist.

4. Lageranordnung nach einem der vorangehenden Ansprüche,
**dadurch gekennzeichnet,**
**dass** der Kühlmittelkanal (7, 7') in unmittelbarer Nähe zu dem Lager (12) in dem ersten und/oder zweiten Lagergehäuseteil (3, 4) verläuft.

5. Lageranordnung nach einem der vorhergehenden Ansprüche,
**dadurch gekennzeichnet,**
**dass** das Lager (12) eine erste Lagerschale (13) aufweist, welche an dem ersten Lagergehäuseteil (3) gehalten ist, wobei das Lager (12) eine zweite Lagerschale (14) aufweist, welche mit einer zu lagernden Welle (5) verbindbar und an dem zweiten Lagergehäuseteil (4) gehalten ist, wobei ein zwischen der ersten und zweiten Lagerschale (13, 14) gebildeter Zwischenraum (15) mit dem Schmiermittelkanal (8) in fluidischer Verbindung steht.

6. Lageranordnung nach Anspruch 5,
**dadurch gekennzeichnet,**
**dass** das Lager (12) als ein Wälzlager, insbesondere Kugelrollenlager, ausgebildet ist, wobei Wälzkörper (16) in dem Zwischenraum (15) angeordnet sind.

7. Lageranordnung nach einem der vorangehenden Ansprüche,
**dadurch gekennzeichnet,**
**dass** das erste Lagergehäuseteil (3) stationär gegenüber einer Welle (5) vorgesehen ist und sich das zweite Lagergehäuseteil (4) mit der Welle (5) mitdreht.

8. Lageranordnung nach einem der vorangehenden Ansprüche,
**dadurch gekennzeichnet,**
**dass** im Bereich eines Spalts (21) zwischen dem ersten und dem zweiten Lagergehäuseteil (3, 4) wenigstens ein Magnet (22) angeordnet ist, wobei das Schmiermittel magnetisierbar ausgebildet ist und der Magnet (22) ein Austreten des Schmiermittels aus dem Spalt (21) verhindert, und/oder dass im Bereich eines Spalts (21) zwischen dem ersten und dem zweiten Lagergehäuseteil (3, 4) wenigstens eine Dichtung (27) angeordnet ist, welche ein Austreten des Schmiermittels und/oder Kühlmittels aus dem Spalt (21) verhindert, wobei die Dichtung (27) bevorzugt einen Verbindungskanal (24) für das Kühlmittel abdichtet, welcher den Spalt (21) überbrückt.

9. Strömungsmaschine (2), insbesondere Turbine, mit einer Lageranordnung (1) nach einem der vorhergehenden Ansprüche.

10. Verfahren zum Herstellen einer Lageranordnung (1), insbesondere der Lageranordnung (1) nach einem der Ansprüche 1 bis 8, wobei ein erstes und/oder zweites Lagergehäuseteil (3, 4) mit wenigstens einem Kühlmittelkanal (7, 7') für ein Kühlen des ersten und/oder zweiten Lagergehäuseteils (3, 4) und wenigstens einem Schmiermittelkanal (8) zum Zuführen von Schmiermittel an ein Lager (12) gebildet wird, wobei der Kühlmittelkanal (7, 7') und der Schmiermittelkanal (8) voneinander fluidisch getrennt vorgesehen werden, durch generatives Fertigen des ersten und/oder zweiten Lagergehäuseteils (3, 4) mitsamt dem Kühlmittelkanal (7, 7') aus einem formlosen oder formneutralen Material in einem Urformverfahren.

## Claims

1. Bearing arrangement (1), in particular for a turbomachine (2), comprising a first and/or second bearing housing part (3, 4) having at least one cooling medium duct (7, 7') for cooling the first and/or second bearing housing part (3, 4) and having at least one lubricant duct (8) for supplying lubricant to a bearing (12), wherein the cooling medium duct (7, 7') and the lubricant duct (8) are provided mutually fluidically separated and wherein the first and/or second bearing housing part (3, 4) including the cooling medium duct (7, 7') is produced generatively from an amorphous or neutrally shaped material in a primary shaping process.

2. Bearing arrangement according to claim 1,
**characterised in that**
the cooling medium duct (7, 7') and optionally the lubricant duct (8) are integrated into the first and/or second bearing housing part (3, 4).

3. Bearing arrangement according to either claim 1 or claim 2,
**characterised in that**
the first and/or second bearing housing part (3, 4) including the cooling duct (7, 7') and the lubricant duct (8) is produced generatively.

4. Bearing arrangement according to any one of the preceding claims,
**characterised in that**
the cooling medium duct (7, 7') extends in direct proximity to the bearing (12) in the first and/or second bearing housing part (3, 4).

5. Bearing arrangement according to any one of the preceding claims,
**characterised in that**
the bearing (12) comprises a first bearing shell (13) which is held on the first bearing housing part (3), the bearing (12) comprising a second bearing shell (14), which can be connected to a shaft (5) to be mounted and is held on the second bearing housing part (5), an intermediate space (15) formed between the first and second bearing shells (13, 14) being fluidically connected to the lubricant duct (8).

6. Bearing arrangement according to claim 5,
**characterised in that**
the bearing (12) is in the form of a rolling bearing, in particular a ball bearing, rolling bodies (16) being arranged in the intermediate space (15).

7. Bearing arrangement according to any one of the preceding claims,
**characterised in that**
the first bearing housing part (3) is provided stationary with respect to a shaft (5) and the second bearing housing part (4) rotates together with the shaft (5).

8. Bearing arrangement according to any one of the preceding claims,
**characterised in that**
at least one magnet (22) is arranged in the region of a gap (21) between the first and the second bearing housing part (3, 4), the lubricant being formed so as to be magnetisable and the magnet (22) preventing the lubricant from escaping from the gap (21), and/or **in that** at least one seal (27) is arranged between the first and the second bearing housing part (3, 4), and prevents the lubricant and/or cooling medium from escaping from the gap (21), the seal (27) preferably sealing a connecting duct (24), which bridges the gap (21), for the cooling medium.

9. Turbomachine (2), in particular a turbine, comprising a bearing arrangement (1) according to any one of the preceding claims.

10. Method for manufacturing a bearing arrangement (1), in particular the bearing arrangement (1) according to any one of claims 1 to 8, wherein a first and/or second bearing housing part (3, 4) having at least one cooling medium duct (7, 7') for cooling the first and/or second bearing housing part (3, 4) and having at least one lubricant duct (8) for supplying lubricant to a bearing (12) is formed, wherein the cooling medium duct (7, 7') and the lubricant duct (8) are provided mutually fluidically separated, by producing the first and/or second bearing housing part (3, 4) including the cooling medium duct (7, 7') generatively from an amorphous or neutrally shaped material in a primary shaping process.

## Revendications

1. Agencement de palier (1), en particulier pour une turbomachine (2), présentant une première et/ou une seconde partie de logement de palier (3, 4) avec au moins un canal de réfrigérant (7, 7') pour un refroidissement de la première et/ou seconde partie de logement de palier (3, 4) et au moins un canal de lubrifiant (8) pour amener un lubrifiant à un palier (12), le canal de réfrigérant (7, 7') et le canal de lubrifiant (8) étant prévus de manière séparée fluidiquement l'un de l'autre, et la première et/ou seconde partie de logement de palier (3, 4) étant produite de manière générative conjointement avec le canal de réfrigérant (7, 7') à partir d'un matériau sans forme ou de forme neutre dans un procédé de façonnage primitif.

2. Agencement de palier selon la revendication 1,
**caractérisé en ce que**
le canal de réfrigérant (7, 7') et éventuellement le canal de lubrifiant (8) est intégré dans la première et/ou seconde partie de logement de palier (3, 4).

3. Agencement de palier selon la revendication 1 ou 2,
**caractérisé en ce que**
la première et/ou seconde partie de logement de palier (3, 4) est produite de manière générative conjointement avec le canal de réfrigérant (7, 7') et le canal de lubrifiant (8).

4. Agencement de palier selon une des revendications précédentes,
**caractérisé en ce que**
le canal de réfrigérant (7, 7') s'étend à proximité immédiate du palier (12) dans la première et/ou seconde partie de logement de palier (3, 4).

5. Agencement de palier selon une des revendications précédentes,
**caractérisé en ce que**
le palier (12) présente une première coquille de palier (13) qui est maintenue sur la première partie de logement de palier (3), le palier (12) présentant une seconde coquille de palier (14) qui peut être reliée à un arbre à monter (5) et est maintenue sur la seconde partie de logement de palier (4), un espace intermédiaire (15) formé entre la première et la seconde coquille de palier (13, 14) étant en liaison fluidique avec le canal de lubrifiant (8).

6. Agencement de palier selon la revendication 5,
**caractérisé en ce que**
le palier (12) est réalisé sous la forme d'un palier à rouleau, en particulier d'un palier à roulement à billes, le rouleau (16) étant disposé dans l'espace intermédiaire (15).

7. Agencement de palier selon une des revendications précédentes,
**caractérisé en ce que**
la première partie de logement de palier (3) est prévue de manière fixe par rapport à un arbre (5) et fait tourner la seconde partie de logement de palier (4) avec l'arbre (5).

8. Agencement de palier selon une des revendications précédentes,
**caractérisé en ce que**,
au niveau d'une fente (21) entre la première et la seconde partie de logement de palier (3, 4), au moins un aimant (22) est disposé, le lubrifiant étant réalisé de manière magnétisable et l'aimant (22) empêchant une sortie de lubrifiant par la fente (21), et/ou **en ce que**, au niveau d'une fente (21) entre la première et la seconde partie de logement de palier (3, 4), au moins un joint d'étanchéité (27) est disposé et empêche une sortie de lubrifiant et/ou réfrigérant par la fente (21), le joint d'étanchéité (27) rendant étanche de préférence un canal de liaison (24) pour le réfrigérant qui ponte la fente (21).

9. Turbomachine (2), en particulier turbine, comprenant un agencement de palier (1) selon une des revendications précédentes.

10. Procédé de fabrication d'un agencement de palier (1), en particulier de l'agencement de palier (1) selon une des revendications 1 à 8, dans lequel une première et/ou seconde partie de logement de palier (3, 4) est formée avec au moins un canal de réfrigérant (7, 7') pour un refroidissement de la première et/ou seconde partie de logement de palier (3, 4) et au moins un canal de lubrifiant (8) pour amener un lubrifiant à un palier (12), le canal de réfrigérant (7, 7') et le canal de lubrifiant (8) étant prévus de manière séparée fluidiquement l'un de l'autre, par la production générative de la première et/ou seconde partie de logement de palier (3, 4) conjointement avec le canal de réfrigérant (7, 7') à partir d'un matériau sans forme ou de forme neutre dans un procédé de façonnage primitif.
